# EUROPÄISCHE PATENTSCHRIFT

(11) **EP 2 957 074 B1**
(45) Veröffentlichungstag und Bekanntmachung des Hinweises auf die Patenterteilung: **21.12.2016**
(21) Anmeldenummer: 14703529.9
(22) Anmeldetag: 24.01.2014
(51) Int. Cl.: H04L 12/40, H04L 12/875

(54) **KRAFTWAGEN MIT EINEM FAHRZEUGKOMMUNIKATIONSBUS UND VERFAHREN ZUM ERZEUGEN VON BUSNACHRICHTEN**
MOTOR VEHICLE COMPRISING A VEHICLE COMMUNICATION BUS AND METHOD FOR GENERATING BUS MESSAGES
VÉHICULE À MOTEUR ÉQUIPÉ D'UN BUS DE COMMUNICATION EMBARQUÉ ET PROCÉDÉ DE GÉNÉRATION D'INFORMATIONS DE BUS

(30) Priorität: 15.02.2013 DE 102013002647
(43) Veröffentlichungstag der Anmeldung: 23.12.2015
(73) Patentinhaber: Audi AG, 85045 Ingolstadt (DE)
(72) Erfinder: HASSE, Andre, 86565 Gachenbach (DE)
(74) Vertreter: Brandt, Kai
(86) Internationale Anmeldenummer: PCT/EP2014/000180
(87) Internationale Veröffentlichungsnummer: WO 2014/124732

(56) Entgegenhaltungen:
- WO-A2-01/50677
- US-B1- 6 665 601

## Beschreibung

Die Erfindung betrifft ein Busgerät für einen Kraftwagen, welches dazu ausgelegt ist, als Master-Busgerät über einen Fahrzeugkommunikationsbus des Kraftwagens Nachrichten mit Slave-Busgeräten auszutauschen. Das Master-Busgerät ist insbesondere für einen LIN-Bus (LIN - Local Interconnect Network) ausgelegt. Zu der Erfindung gehören auch ein entsprechender Kraftwagen sowie ein Verfahren zum Betreiben eines Master-Busgeräts an einem Fahrzeugkommunikationsbus eines Kraftwagens.

In einem LIN-Bus werden vom Master-Busgerät an die übrigen Busteilnehmer, also die Slave-Busgeräte, in vorgegebenen Zeitschlitzen und in einer vorgegebenen Reihenfolge Nachrichten verschickt. Auch der Nachrichtentyp ist festgelegt. Mit Nachrichtentyp ist hier gemeint, dass eine Nachricht an einen ganz bestimmten Adressaten mit einer ganz bestimmten Aufforderung gesendet wird. So kann eine Nachricht z.B. ein Steuersignal an ein ganz bestimmtes Slave-Busgerät umfassen, wie etwa ein Aktivierungssignal für eine Schiebedachsteuerung. Eine Nachricht kann aber auch eine Aufforderung an ein Slave-Busgerät umfassen, dass dieses Daten eines bestimmten Typs aussenden soll, also z.B. eine aktuelle Temperatur. Nach dem LIN-Standard umfasst die Nachricht in diesem Fall den vom Master-Busgerät ausgesendeten Nachrichtenkopf (Header) mit der Sendeaufforderung, an den dann vom Slave-Busgerät die geforderten Daten angefügt sind.

Die Vorgaben zu den Sendezeiten und dem Nachrichtentyp ergeben sich aus einem Ablaufplan (englisch: Schedule), welcher in einem Speicher des Master-Busgeräts gespeichert ist. Der Ablaufplan wird vom Master-Busgerät zyklisch abgearbeitet, d.h. nach Beendigung des letzten Schrittes des Ablaufplans fängt das Master-Busgerät im Ablaufplan wieder von vorne an. Die Komponente des Master-Busgeräts, welche den Ablaufplan zyklisch Abarbeitet und die Nachrichten mit den Slave-Busgeräten austauscht, ist hier als Sendeeinrichtung des Master-Busgeräts bezeichnet.

Der Ablaufplan muss zur Entwicklungszeit des Master-Busgeräts festgelegt und in dem Speicher gespeichert werden. Er muss hierbei alle Situationen berücksichtigen, die sich in einem Kraftwagen im Laufe von dessen Betrieb ergeben können. Im Normalbetrieb des Kraftwagens, wenn ein Fahrer den Kraftwagen benutzt, um mit diesem beispielsweise zu fahren, tauscht das Master-Busgerät mit den Slave-Busgeräten Nachrichten betreffend den Betrieb des Kraftwagens aus. Handelt es sich bei einem Slave-Busgerät beispielsweise um einen Sensor, so können mittels einsprechender Nachrichten Sensordaten von dem Slave-Busgerät zum Master-Busgerät übertragen werden. Handelt es sich bei dem Slave-Busgerät um einen Aktor, also beispielsweise ein Steuergerät mit einem daran angeschlossenen Motor für beispielsweise ein Schiebedach, so kann durch das Master-Busgerät mittels einer entsprechenden Nachricht ein Steuerbefehl zum Aktivieren gesendet werden.

Neben solchen Nachrichten für den Normalbetrieb muss es für Wartungsarbeiten aber auch möglich sein, dass das Master-Busgerät mit den Slave-Busgeräten Nachrichten für die Diagnose oder die Neukonfigurierung der Slave-Busgeräte austauschen kann. In dem Ablaufplan des Master-Busgeräts sind deshalb in der Regel einige Zeitschlitze in dem Ablaufplan für eine solche Diagnosekommunikation mit dem Slave-Busgerät reserviert. Diese Zeitschlitze werden dann im Normalbtrieb nicht genutzt, d.h. das Master-Busgerät hat im Normalbetrieb des Kraftwagens hier jeweils eine Sendepause. Erst bei Wartungsarbeiten in einer Werkstatt kann es dann dazu kommen, dass das Master-Busgerät den Zeitschlitz für die Diagnosekommunikation verwendet.

Das Dokument US 6665601 B1 zeigt ein Kommunikationssystem für ein Arbeitsfahrzeug zum Verwalten der Kommunikation zwischen Steuereinheiten, welche verschiedene Funktionen des Fahrzeugs steuern. Das System umfasst einen Datenbus, welcher durch ein Fahrzeug unterstützt wird, zum Kommunizieren von Nachrichten zwischen Steuereinheiten auf dem Bus. Jede Steuereinheit weist einen Prozessor auf zum Steuern von bidirektionaler Kommunikation mit den anderen Steuereinheiten, umfassend die Übertragung von ersten Nachrichten auf den Datenbus und Empfang von zweiten Nachrichten von dem Bus. Der Prozessor jeder Steuereinheit plant die Übertragung von nur einer vordefinierten Anzahl von ersten Nachrichten auf dem Bus während einer vordefinierten Zeitperiode. Der Prozessor jeder Steuereinheit sortiert effizient die zweiten Nachrichten in Bezug auf eine Vielzahl von Nachschlagetabellen, um zwischen unerwünschten Nachrichten und einem Satz von gewünschten Nachrichten zu unterscheiden.

Das Dokument WO 2001050677 A2 zeigt ein Verfahren und eine Vorrichtung zum Austausch von Daten in Nachrichten zwischen wenigstens zwei Teilnehmern, welche mittels eines Bussystems verbunden sind, wobei die, die Daten enthaltenden Nachrichten durch die Teilnehmer über das Bussystem übertragen werden und die Nachrichten durch einen ersten Teilnehmer zeitlich derart gesteuert werden, dass der erste Teilnehmer wiederholt eine Referenznachricht in wenigstens einem vorgebbaren zeitlichen Abstand über den Bus überträgt und der zeitliche Abstand in Zeitfenster vorgebbarer Länge unterteilt wird, wobei die Nachrichten in den Zeitfenstern übertragen werden, wobei eine Referenznachricht und die nachfolgenden Zeitfenster bis zur nächsten Referenznachricht zu einem ersten Zyklus zusammengefasst werden und der erste Teilnehmer durch eine Stop-Anforderung, insbesondere eine Nachricht des wenigstens zweiten Teilnehmers, die Übertragung am Ende eines ersten Zyklus unterbricht.

Aus der DE 10 2006 032 217 A1 ist ein Verfahren zum Betreiben eines LIN-Busses bekannt, bei welchem ein alternatives Kommunikationsprotokoll durch das LIN-Protokoll getunnelt wird. Hierdurch können in LIN-Botschaften jeweils Abschnitte eines Datenstroms transportiert werden, der gemäß einem Diagnoseprotokoll während einer Diagnosesitzung über den Fahrzeugkommunikationsbus übertragen werden muss.

Der Erfindung liegt die Aufgabe zugrunde, einen Fahrzeugkommunikationsbus durch ein Ablaufplan-gesteuertes Master-Busgerät effizient zu nutzen.

Die Aufgabe wird durch ein Master-Busgerät gemäß Patentanspruch 1, einen Kraftwagen gemäß Patentanspruch 7 und ein Verfahren gemäß Patentanspruch 8 gelöst. Vorteilhafte Weiterbildungen der Erfindungen sind durch die Unteransprüche gegeben.

Das erfindungsgemäße Master-Busgerät ist eine Weiterbildung eines Master-Busgeräts für einen Kraftwagen, welches dazu ausgelegt ist, über einen Fahrzeugkommunikationsbus des Kraftwagens Nachrichten mit Slave-Busgeräten des Kraftwagens auszutauschen. In dem Master-Busgerät ist in der beschriebenen Weise durch einen Ablaufplan (Schedule) festgelegt, welche Nachrichten das Master-Busgerät mit den Slave-Busgeräten im Normalbetrieb austauscht. Der Ablaufplan wird durch eine Sendeeinrichtung des Master-Busgeräts zyklisch abgearbeitet, was bedeutet, dass die Sendeinrichtung gemäß dem Ablaufplan immer wieder Nachrichten oder Botschaften desselben Typs in vorbestimmten Zeitschlitzen über den Kommunikationsbus mit den Slave-Busgeräten austauscht. Bei dem Master-Busgerät handelt es sich insbesondere um ein Master-Busgerät für einen LIN-Bus, d.h. die über den LIN-Bus ausgetauschten Nachrichten sind dann LIN-Botschaften, wie sie an sich aus dem LIN-Standard bekannt sind.

Die Sendeeinrichtung ist gemäß der Erfindung zusätzlich dazu ausgelegt, über einen Dateneingang ein Diagnoseanfragesignal zu empfangen, das z.B. von einem Fahrzeug-Testgerät kommen kann. Bei dem Dateneingang kann es sich entsprechend beispielsweise um einen Anschluss für ein Diagnosegerät oder ein Testgerät handeln, das hierüber an den Kraftwagen angeschlossen werden kann. Allgemein ausgedrückt ist der Dateneingang vom Busanschluss des Master-Busgeräts verschieden.

In Abhängigkeit von dem Diagnoseanfragesignal wird dann das zyklische Abarbeiten des Ablaufplans durch die Sendeeinrichtung zumindest einmal unterbrochen. Die Sendeeinrichtung tauscht dann also keine Nachrichten mehr in der Weise aus, wie es der Ablaufplan vorschreibt. Stattdessen ist vorgesehen, dass die Sendeeinrichtung bei jeder Unterbrechung mit zumindest einem der Slave-Busgeräte zumindest eine Sondernachricht austauscht. Die zumindest eine Sondernachricht ist dabei von den im Ablaufplan festgelegten Nachrichten verschieden. Nach dem Austauschen der zumindest einen Sondernachricht während einer Unterbrechung wird der Ablaufplan danach wieder aktiviert, d.h. die zyklische Abarbeitung des Ablaufplans wird durch die Sendeeinheit fortgesetzt. Diese von der Sendeeinheit des Master-Busgeräts durchgeführten Schritte entsprechen auch dem erfindungsgemäßen Verfahren. Es kann insbesondere vorgesehen sein, dass bei jeder Unterbrechung durch ein Diagnoseanfragesignal nur eine oder zwei Sondernachrichten erzeugt werden.

Erfindungsgemäß sind auch mehrere Sonderablaufpläne vorgesehen. Dann kann durch eine Diagnosebotschaft beispielsweise eine Selbstdiagnose in einem Slave-Busgerät durch die Sendeeinrichtung angestoßen werden und zum Übertragen dieser Diagnosebotschaft ein erster Sonderablaufplan in der beschriebenen Weise genutzt werden. Nachdem die Selbstdiagnose im Slave-Busgerät abgeschlossen ist, können dann mittels eines zweiten Sonderablaufplans Diagnoseergebnisse durch die Sendeeinrichtung aus dem Slave-Busgerät ausgelesen werden. Auch hierbei ist die Sendeeinrichtung dann dazu ausgelegt, von dem Slave-Busgerät über den Fahrzeugkommunikationsbus während einer jeweiligen Unterbrechung des normalen Ablaufplans durch einmaliges Abarbeiten des zweiten Sonderablaufplans eine Diagnoseantwort zu empfangen, die Teil des Diagnoseergebnisses ist. Der normale Ablaufplan wird auch hierbei wieder jeweils nach einer vorbestimmten Zeitdauer erneut Unterbrochen und der zweite Sonderablaufplan während jeder Unterbrechung einmal durchlaufen, bis die Diagnoseergebnisse im Master-Busgerät vollständig sind.

Die Erfindung weist den Vorteil auf, dass der Ablaufplan für das Master-Busgerät nun nicht mehr Zeitschlitze sowohl für den Normalbetrieb als auch für eine Diagnosekommunikation in einer Werkstatt vorhalten muss, damit Nachrichten des entsprechenden Nachrichtentyps über den Fahrzeugkommunikationsbus gesendet werden können. Vielmehr kann der Ablaufplan nun vollständig, zumindest aber zum überwiegenden Teil, für einen Normalbetrieb des Kraftwagens ausgelegt sein, d.h. für einen Betrieb, in welchem ein Fahrer den Kraftwagen benutzt. Mit anderen Worten kann der Ablaufplan vollständig oder zumindest zum überwiegenden Teil nur Nachrichten betreffend den Betrieb des Kraftwagens während des Normalbetriebs umfassen. Es ergibt sich so für die Übertragung der Nachrichten für den Normalbetrieb eine größere Bandbreite. Die für den Normalbetrieb des Kraftwagens vorgesehenen Nachrichten werden hier im Zusammenhang mit dem LIN-Standard auch als Funktionsbotschaften bezeichnet. Im Falle eines LIN-Busses sind also im Ablaufplan bevorzugt ausschließlich Funktionsbotschaften vorgesehen.

Ist es dann einmal nötig, eine Diagnosenachricht mittels des Master-Busgeräts über den Fahrzeugkommunikationsbus mit einem der Slave-Busgeräte auszutauschen, so kann dies mittels einer Sondernachricht getan werden. Ein weiterer Vorteil der Erfindung besteht dabei darin, dass die Sondernachrichten zu beliebigen Zeitpunkten jederzeit in den Datenverkehr des Fahrzeugkommunikationsbusses eingefügt werden können. Es muss hierbei lediglich ein Diagnoseanfragesignal am Dateneingang erzeugt werden, um die Sendeeinrichtung dazu zu veranlassen, eine Sondernachricht auszusenden.

Bei der Sondernachricht handelt es sich bevorzugt um eine Diagnoseanfrage, wie sie bei einer Wartung des Kraftwagens oder auch bei der Herstellung des Kraftwagens beispielsweise für eine Funktionsprüfung nötig ist. Durch eine solche Diagnoseanfrage kann beispielsweise eine Seriennummer eines Slave-Busgeräts, eine Softwareversion einer Betriebssoftware, eine Hardwarenummer eine Gerätekomponente oder auch eine eingestellte Konfiguration des Slave-Busgeräts abgefragt werden. Die Sondernachricht kann auch Konfigurationsdaten für ein Slave-Busgerät umfassen, so dass mittels der Sondernachrichten ein Slave-Busgerät auch konfiguriert werden kann. Bevorzugt signalisiert das Diagnoseanfragesignal auch gleich diejenigen Diagnosebotschaften, die über den Kommunikationsbus an ein Slave-Busgerät übertragen werden müssen. Das Master-Busgerät empfängt also über seinen Dateneingang durch das Diagnoseanfragesignal eine oder mehrere Diagnosebotschaften, die als Sondernachrichten über den Kommunikationsbus zu übertragen sind.

Ein weiterer Vorteil ergibt sich, wenn während einer jeweiligen Unterbrechung des normalen Ablaufplans die zumindest eine Sondernachricht durch einen Sonderablaufplan übertragen wird. Es muss dann also nur von dem normalen Ablaufplan (auch als applikativer Schedule bezeichnet) zu einem Sonderablaufplan umgeschaltet werden. Die Sendeeinrichtung ist in diesem Fall dazu ausgelegt, den Sonderablaufplan jeweils nur einmal zu durchlaufen. Danach setzt sie dann die Abarbeitung des normalen Ablaufplans fort. Nach einer vorbestimmten Zeitdauer wird dann wieder der normale Ablaufplan unterbrochen und wieder der Sonderablaufplan einmal durchlaufen, um wieder eine oder mehrere Sondernachrichten zu übertragen. Dies wiederholt die Sendeinrichtung solange, bis alle Diagnoseanfragen aus dem Diagnoseanfragesignal als Sonderbotschaften übertragen worden sind. Der Master erkennt dabei bevorzugt implizit bei Empfang eines Diagnoseanfragesignals am Dateneingang, dass Sondernachrichten z.B. zu einem LIN-Slave übertragen werden müssen. Die Steuerung der Scheduleumschaltung erfolgt dann auch entsprechend implizit, d.h. es müssen keine zusätzlichen Steuersignale über den Dateneingang des Master-Busgeräts übertragen werden. Das würde auf der Kommunikationsverbindung zusätzliche Bandbreite benötigen. Diese kann man in vorteilhafter Weise einsparen, wenn die Umschaltung des Schedules implizit aus dem Dateneingang abgeleitet wird. Bevorzugt ist die Sendeeinrichtung dazu ausgelegt, die Abarbeitung des Ablaufplans an der Stelle im Ablaufplan fortzusetzen, an welcher die Abarbeitung durch das Diagnoseanfragesignal unterbrochen worden ist. Hierdurch ergibt sich der Vorteil, dass der Kraftwagen normal weiterbetrieben werden kann. Es ergibt sich im Vergleich zur Dauer eines einzelnen zyklischen Durchlaufs des Ablaufplans lediglich eine Verzögerung von z.B. maximal 10 Prozent, wenn zusätzlich die Sondernachricht ausgetauscht wird. Dies führt in der Regel nicht zu einer merklichen Beeinträchtigung der Betriebsweise des Kraftwagens. Das ist die technisch sinnvollste Anwendung, jedoch ist es technisch auch möglich, den unterbrochenen Schedule immer wieder von vorne zu starten.

Wie bereits ausgeführt, gehört zu der Erfindung auch ein Kraftwagen. Dieser zeichnet sich dadurch aus, dass er einen Fahrzeugkommunikationsbus aufweist, an welchen ein Master-Busgerät gemäß einer Ausführungsform des erfindungsgemäßen Master-Busgeräts angeschlossen ist. Der erfindungsgemäße Kraftwagen weist den Vorteil auf, dass über seinen Fahrzeugkommunikationsbus während des Normalbetriebs des Kraftwagens die für den Normalbetrieb nötigen Nachrichten mit einer verhältnismäßig großen Bandbreite ausgetauscht werden können (also z.B. Funktionsbotschaften) und dennoch jederzeit eine Diagnosekommunikation oder eine Konfiguration von Slave-Busgeräten über den Fahrzeugkommunikationsbus erfolgen kann.

Zu der Erfindung gehören auch Weiterbildungen des erfindungsgemäßen Verfahrens, welche Verfahrensschritte umfassen, die bereits im Zusammenhang mit den Weiterbildungen des erfindungsgemäßen Master-Busgeräts beschrieben worden sind. Aus diesem Grund werden die entsprechenden Weiterbildungen des erfindungsgemäßen Verfahrens hier nicht noch einmal beschrieben.

Im Folgenden wird die Erfindung noch einmal genauer anhand eines konkreten Ausführungsbeispiels erläutert. Bei dem Ausführungsbeispiel stellen die beschriebenen Komponenten der Ausführungsform der Erfindung und die beschriebenen Schritte des Verfahrens jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

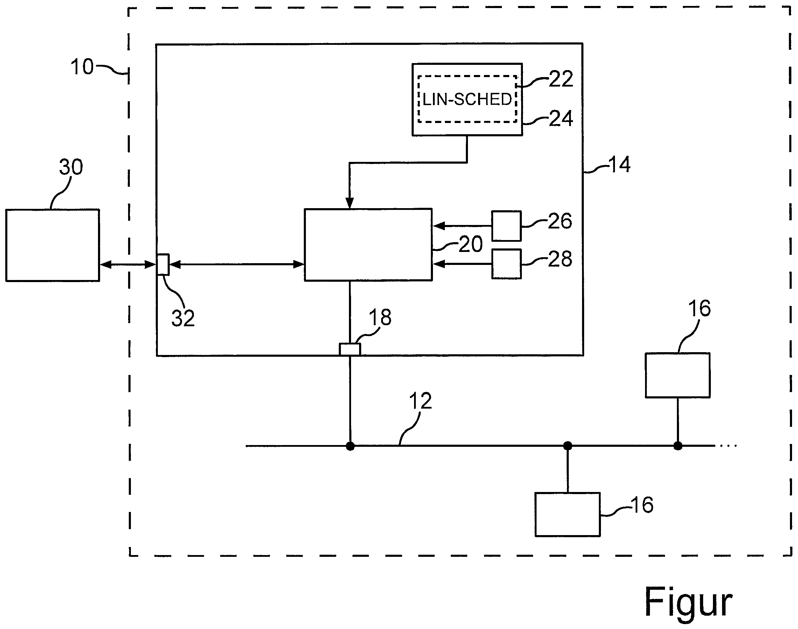

Für die Erläuterung des Ausführungsbeispiels ist in der einzigen Figur schematisch ein Kraftwagen 10 dargestellt, bei dem es sich beispielsweise um einen Personenkraftwagen handeln kann.

Der Kraftwagen 10 weist einen Fahrzeugkommunikationsbus 12 auf, bei dem es sich beispielsweise um einen LIN-Bus handeln kann, über welchen Botschaften gemäß dem LIN-Standard (also LIN-Botschaften) übertragen werden. Die Kommunikation auf dem Fahrzeugkommunikationsbus, im Folgenden kurz Bus 12, wird in dem Kraftwagen 10 durch ein Master-Busgerät oder kurz Busmaster 14, gesteuert. Der Busmaster 14 tauscht hierbei die Botschaften mit Slave-Busgeräten, oder kurz Slavegeräten 16, aus. Die Geräte sind dazu alle an den Bus 12 angeschlossen. In der Figur sind nur zwei Slavegeräte 16 dargestellt, es können aber mehr Slavegeräte oder auch nur ein Slavegerät angeschlossen sein. Bei einem Slavegerät 16 kann es sich beispielsweise um eine Schaltung mit einem Sensor, beispielsweise einem Temperaturfühler, oder um einen Aktor, beispielsweise eine Motorsteuerung für einen Fensterheber, handeln. Ein Slavegerät 16 kann aber auch ein Steuergerät mit einer eigenen Betriebssoftware sein.

Der Busmaster 14 ist über einen Busanschluss 18 mit dem Bus 12 verbunden. Die Botschaften, die der Busmaster 14 über den Bus 12 mit den Slavegeräten 16 austauscht, können durch eine Sendeeinrichtung 20 des Busmasters 14 erzeugt werden. Eine Nachricht kann dabei eine Sendenachricht sein, mit welcher der Busmaster 14 Daten an eines der Slavegeräte 16 überträgt. Eine Nachricht kann auch eine Lesenachricht sein, mit welcher der Busmaster 14 eines oder mehrere der Slavegeräte 16 in der eingangs beschriebenen Weise dazu veranlasst, Daten über den Bus 12 an den Busmaster 14 zu senden. Die Sendeeinrichtung 20 kann beispielsweise einen Mikrocontroller und/oder ein Programmmodul für den Mikrocontroller umfassen.

Der Busmaster 14 tauscht zyklisch immer wieder Nachrichten eines vorbestimmten. Typs in einer vorgegebenen Reihenfolge und zu vorgegebenen Zeitpunkten mit den Slavegeräten 16 aus. Beispielsweise kann also durch den Busmaster 14 ein Slavegerät mit einem Temperaturfühler zyklisch zu ganz bestimmten Zeitpunkten wiederholt aufgefordert werden, einen aktuellen Temperaturwert an den Busmaster 14 zu senden. Ist zu einem bestimmten Zeitpunkt oder Zeitfenster (auch Zeitschlitz genannt) eine Nachricht eines bestimmten Typs zu senden, liegen hierzu aber keine Daten vor, so kommt es zu einer Sendepause auf dem Bus 12.

Welche Nachrichten wann von der Steuereinheit 20 am Busanschluss 18 auszugeben sind, ist durch einen Ablaufplan (englisch: Schedule) festgelegt. Das Busgerät 14 weist einen Betriebs-Ablaufplan 22 auf. Der Betriebs-Ablaufplan 22 ist für einen Anwendungsmodus des Mastergeräts 14 ausgelegt und legt eine Reihenfolge und Taktung (Sendezeitschlitze) für Nachrichten fest, wie sie geeignet sind, um in einem Normalbetrieb des Kraftwagens, also beispielsweise während einer Fahrt, mit den Slavegeräten 16 die Sensordaten bzw. Steuerdaten auszutauschen, wie es für einen reibungslosen Betrieb des Kraftwagens 10 erforderlich ist. Der Ablaufplan 22 kann dabei in der Weise optimiert sein, dass keinerlei Nachrichten, d.h. keinerlei Zeitschlitze, für solche Nachrichten reserviert sind, die während des Normalbetriebs des Kraftwagens nicht ausgetauscht werden müssen, also beispielsweise Diagnosenachrichten oder Konfigurationsnachrichten zum Einstellen des Betriebsverhaltens der Slavegeräte 16.

Der Ablaufplan 22 ist in einem Speicher 24 gespeichert, beispielsweise in einem Flash-Speicher, EEPOM oder einer Festplatte. Die Sendeeinrichtung 20 ist mit dem Speicher 24 gekoppelt.

Für die weitere Erläuterung des Ausführungsbeispiels sei angenommen, dass der Kraftwagen 10 in eine Werkstatt gebracht wurde, um die Funktionsweise der Slavegeräte 16 überprüfen oder neu einstellen zu lassen. Dies erfordert das Austauschen von Sondernachrichten über den Bus 12, also Nachrichten, die nicht im Normalbetrieb des Kraftwagens 10 vorkommen. Beispielsweise kann ein Fahrer des Kraftwagens 10 festgestellt haben, dass er mit der Bedienung eines der Slavegeräte 16 Schwierigkeiten hat, beispielweise der Bedienung eines Steuergeräts für ein Schiebedach. Deshalb kann es z.B. nötig sein, eine Softwareversion einer Betriebssoftware eines der Slavegeräte 16 über den Bus 12 mittels des Busmasters 14 abzufragen. Es kann sich bei dem Kraftwagen 10 auch um einen Prototypen handeln, der sich in der Entwicklung befindet. Um dann beispielsweise Steuerprogramme der Slavegeräte 16 für die Alltagstauglichkeit zu verbessern, wird der Kraftwagen 10 regelmäßig nach Probefahrten in die Werkstatt gebracht, um die Slavegeräte 16 neu zu konfigurieren. Dazu müssen Konfigurationsdaten von dem Busmaster 14 über den Bus 12 an die Slavegeräte 16 übertragen werden. Ein anderes Szenario kann die Konfiguration und das Testen der Slavegeräte 16 während der Herstellung des Kraftwagens 10 sein. Auch hier kann in einer Werkstatt eine Buskommunikation nötig sein, die von der Buskommunikation während des Normalbetriebs abweicht.

Der Ablaufplan 22 kann dennoch in der Weise ausgelegt sein, dass er keine Diagnosekommunikation berücksichtigt. Der Busmaster 14 verwendet den Ablaufplan 22 für den Normalbetrieb des Kraftwagens 10. Erst wenn eine Diagnosebotschaft vom Busmaster 14 über den Bus 12 an ein Slavegerät 16 gesendet werden soll, schaltet der Busmaster in einen Ablaufplan 26, der das Senden einer Diagnosenachricht ermöglicht. Danach wird der Ablaufplan 22 des Normalbetriebs an der Stelle fortgesetzt, wo er unterbrochen wurde. Dies wird in einem frei definierbaren Zeitabstand wiederholt, um so den gesamten Inhalt einer Diagnoseanfrage übertragen zu können. Wurde die Diagnoseanfrage vollständig abgesendet, schaltet der Busmaster 14 in einen Ablaufplan 28, der das Empfangen von einer Diagnosebotschaft ermöglicht. Danach wird der Ablaufplan 22 des Normalbetriebs wieder an der Stelle fortgesetzt, wo er unterbrochen wurde. Dies wird in einem frei definierbaren Zeitabstand wiederholt, um den gesamten Inhalt der Diagnoseantwort zu übertragen. Der Ablaufplan 26 zum Senden und der Ablaufplan 28 zum Empfangen der Diagnosebotschaften können ebenfalls in einem Speicher des Busmasters 14 oder außerhalb des Busmasters 14 in derselben Weise gespeichert sein, wie der Ablaufplan 22 in dem Speicher 24. Die Ablaufpläne 22, 26, 28 können auch gemeinsam in dem Speicher 24 gespeichert sein. Die Ablaufpläne 26, 28 stellen Sonderablaufpläne im Sinne der Erfindung dar.

Um die Sendeeinrichtung 20 in der Abarbeitung des Ablaufplan 22 zu unterbrechen und eine Diagnoseanfrage über den Bus 12 an eines der Slavegeräte 16 zu senden, kann vorgesehen sein, dass an den Kraftwagen 10 ein entsprechendes Testgerät oder Steuergerät 30 angeschlossen wird. Das Steuergerät 30 kann dann über einen Dateneingang 32 des Busmasters 14 mit der Sendeeinrichtung 20 gekoppelt sein. Über den Dateneingang 32 kann das Steuergerät 30 Daten mit einer Diagnoseanfrage an die Sendeinrichtung 20 übertragen und hierdurch das Umschalten der Ablaufpläne bewirken. Wird dann gemäß dem Ablaufplan 26 ein Zeitschlitz für eine Diagnoseanfrage bereitgestellt, kann durch die Sendeeinrichtung 20 die Diagnoseanfrage gemäß den empfangenen Daten ausgesendet werden. Die mittels beispielsweise des Ablaufplans 28 empfangenen Diagnoseantworten können dann ebenfalls von der Sendeeinrichtung 20 über den Datenanschluss 32 an das Steuergerät 30 übertragen werden, so dass in dem Steuergerät 30 beispielsweise von einer (nicht dargestellten) Bedienperson die Diagnosedaten verwendet werden können.

Durch das Beispiel ist gezeigt, wie durch den Ablaufplan 22 (Schedule) für den Normalbetrieb eines Kraftwagens die Bandbreite eines Busses 12, insbesondere eines LIN-Busses, vollständig für Botschaften genutzt werden kann, die für die eigentliche Funktion des Kraftwagens 10 notwendig sind. Dennoch ist eine Diagnosekommunikation möglich. Die hierbei verfügbare Bandbreite für die Diagnosekommunikation und die daraus resultierende Verzögerung der Funktionsbotschaften aufgrund der Unterbrechung des Ablaufplans 22 kann über den Zeitabstand zwischen der Aktivierung der Diagnose-Ablaufpläne 26, 28 frei eingestellt werden. Erfindungsgemäß kann hier auch vorgesehen sein, den normalen Ablaufplan 22 (auch applikativer Schedule genannt) zuerst mit einer Anfrage für ein Diagnose an einen Slave zu unterbrechen, z.B. mittels des Ablaufplans 26. Wenn diese Anfrage vollständig gesendet wurde, wird der applikative Schedule danach mit Headern für die Diagnose-Antwort des Slaves unterbrochen, z.B. mittels des Ablaufplans 28. Erst wenn die Antwort vollständig empfangen wurde, läuft der applikative Schedule ohne Unterbrechung weiter.

## Patentansprüche

1. Master-Busgerät (14) für einen Kraftwagen (10), welches dazu ausgelegt ist, über einen Fahrzeugkommunikationsbus (12) des Kraftwagens (10) Nachrichten mit Slave-Busgeräten (16) des Kraftwagens (10) auszutauschen, wobei in dem Master-Busgerät (14) durch einen Ablaufplan (22) festgelegt ist, welche Nachrichten das Master-Busgerät (14) mit den Slave-Busgeräten (16) austauscht, und wobei der Ablaufplan durch eine Sendeeinrichtung (20) des Master-Busgeräts (14) zyklisch abgearbeitet wird und hierdurch die Sendeinrichtung (20) die gemäß dem Ablaufplan (22) festgelegten Nachrichten mit den Slave-Busgeräten (16) austauscht,
wobei die Sendeeinrichtung (20) dazu ausgelegt ist, ein Diagnoseanfragesignal über einen vom Busanschluss (18) des Master-Busgeräts (14) verschiedenen Dateneingang (32) zu empfangen und in Abhängigkeit von dem Diagnoseanfragesignal zumindest einmal das zyklische Abarbeiten des Ablaufplans (22) zu unterbrechen und während der Unterbrechung zumindest eine von den im Ablaufplan (22) festgelegten Nachrichten verschiedene Sondernachricht mit zumindest einem der Slave-Busgeräte (16) auszutauschen und
**dadurch gekennzeichnet, dass**
die Sendeeinrichtung (20) weiter dazu ausgelegt ist, von zumindest einem Slave-Busgerät über den Fahrzeugkommunikationsbus (12) während eines erneuten Unterbrechens des Ablaufplans durch einmaliges Abarbeiten eines zweiten Sonderablaufplans (26, 28) eine Diagnoseantwort zu empfangen und jeweils nach der Unterbrechung die Abarbeitung des Ablaufplans (22) fortzusetzen.

2. Master-Busgerät (14) nach Anspruch 1, wobei das Master-Busgerät (14) dazu ausgelegt ist, die Nachrichten über einen LIN-Bus (12) auszutauschen, wobei die Nachrichten und die zumindest eine Sondernachricht jeweils als eine LIN-Botschaft ausgestaltet sind.

3. Master-Busgerät (14) nach einem der vorhergehenden Ansprüche, wobei der Ablaufplan (22) für einen Normalbetrieb des Kraftwagens (10) ausgelegt ist, wobei in dem Normalbetrieb ein Fahrer den Kraftwagen (10) benutzt, und der Ablaufplan (22) zumindest zu einem überwiegenden Teil, bevorzugt vollständig, nur Nachrichten betreffend den Betrieb des Kraftwagens (10) während des Normalbetriebs umfasst.

4. Master-Busgerät (14) nach einem der vorhergehenden Ansprüche, wobei jede Sondernachricht zumindest einen Teil einer Diagnoseanfrage, die in dem Diagnoseanfragesignal enthalten ist, und/oder zumindest einen Teil von Konfigurationsdaten, die in dem Diagnoseanfragesignal enthalten sind, umfasst.

5. Master-Busgerät (14) nach einem der vorhergehenden Ansprüche, wobei die Sendeeinrichtung (20) dazu ausgelegt ist, die während des jeweiligen Unterbrechens des Ablaufplans die zumindest eine Sondernachricht durch einmaliges Abarbeiten eines ersten Sonderablaufplans (26, 28) auszusenden.

6. Master-Busgerät (14) nach einem der vorhergehenden Ansprüche, wobei die Sendeeinrichtung (20) dazu ausgelegt ist, die Abarbeitung des Ablaufplans (22) an einer Stelle im Ablaufplan (22) fortzusetzen, an welcher die Abarbeitung zum Senden der jeweiligen Sondernachricht unterbrochen worden ist.

7. Kraftwagen (10) mit einem Fahrzeugkommunikationsbus (12), an welchen ein Master-Busgerät (14) nach einem der vorhergehenden Ansprüche angeschlossen ist.

8. Verfahren zum Betreiben eines Master-Busgeräts (14) für einen Fahrzeugkommunikationsbus (12) eines Kraftwagens (10), wobei in dem Master-Busgerät (14) durch einen Ablaufplan (22) festgelegt ist, welche Nachrichten das Master-Busgerät (14) über den Fahrzeugskommunikationsbus (12) mit Slave-Busgeräten (16) des Kraftwagens austauscht, umfassend die Schritte:
a) durch eine Sendeeinrichtung (20) des Master-Busgeräts (14) zyklisches Abarbeiten des Ablaufplans (22) und hierdurch Erzeugen Nachrichten auf dem Kommunikationsbus (12) gemäß dem Ablaufplan;
b) Empfangen eines Diagnoseanfragesignals über einen vom Busanschluss (18) des Master-Busgeräts (14) verschiedenen Dateneingang (32);
c) in Abhängigkeit von dem Diagnoseanfragesignal zumindest einmal Unterbrechen des zyklischen Abarbeitens des Ablaufplans (22) und Austauschen zumindest einer von den im Ablaufplan (22) festgelegten Nachrichten verschiedene Sondernachricht mit zumindest einem der Slave-Busgeräte (16); **gekennzeichnet durch** die Schritte:
d) während eines erneuten Unterbrechens des Ablaufplans **durch** einmaliges Abarbeiten eines zweiten Sonderablaufplans (26, 28) Empfangen einer Diagnoseantwort von zumindest einem Slavebusgerät über den Fahrzeugkommunikationsbus (12);
e) nach jeder Unterbrechung wieder Erzeugen von Nachrichten auf dem Kommunikationsbus (12) gemäß dem Ablaufplan (22).

## Claims

1. Master bus device (14) for a motor vehicle (10) that is designed to exchange messages with slave bus devices (16) of the motor vehicle (10) via a vehicle communication bus (12) of the motor vehicle (10), wherein it is stipulated by a main schedule (22) in the master bus device (14) which messages the master bus device (14) exchanges with the slave bus devices (16), and wherein the main schedule is cyclically processed by a transmission device (20) of the master bus device (14) and thereby the transmission device (20) exchanges the messages stipulated by the main schedule (22) with the slave bus devices (16);wherein the transmission device (20) is configured to receive a diagnosis request signal via a data input (32) that is different from the bus port (18) of the master bus device (14) and, based on the diagnosis request signal, to interrupt the cyclic processing of the main schedule (22) at least once and, during the interruption, to exchange at least one special message that is different from the messages stipulated in the main schedule (22) with at least one of the slave bus devices (16) and **characterized in that**
the transmission device (20) is further configured to receive a diagnosis response from at least one of the slave bus devices via the vehicle communication bus (12) during a further interruption of the main schedule through one-off processing of a second special schedule (26, 28), and to continue processing of the main schedule (22) after each interruption.

2. Master bus device (14) according to claim 1, wherein the master bus device (14) is configured to exchange the messages via a LIN bus (12), wherein each of the messages and the at least one special message is a LIN message.

3. Master bus device (14) according to any of the preceding claims, wherein the main schedule (22) is configured for a normal operation of the motor vehicle (10), wherein a driver uses the motor vehicle (10) during the normal operation and the main schedule (22) comprises at least predominantly, and preferably completely, only messages relating to operation of the motor vehicle (10) during the normal operation.

4. Master bus device (14) according to any of the preceding claims, wherein each special message comprises at least a portion of a diagnosis request contained in the diagnosis request signal and/or at least a portion of configuration data contained in the diagnosis request signal.

5. Master bus device (14) according to any of the preceding claims, wherein the transmission device (20) is configured to transmit the at least one special message by one-off processing of a first special schedule (26, 28) during a respective interruption of the main schedule.

6. Master bus device (14) according to any of the preceding claims, wherein the transmission device (20) is configured to continue processing of the main schedule (22) at a location in the main schedule (22) at which the processing was interrupted for transmitting the respective special message.

7. Motor vehicle (10) comprising a vehicle communication bus (12) to which a master bus device (14) according to any of the preceding claims is connected.

8. Method for operating a master bus device (14) for a vehicle communication bus (12) of a motor vehicle (10), wherein it is stipulated by a main schedule (22) in the master bus device (14) which messages the master bus device (14) exchanges with slave bus devices (16) of the motor vehicle via the vehicle communication bus (12), the method comprising the steps of:
a) using a transmission device (20) of the master bus device (14), cyclically processing the main schedule (22) and thereby generating messages on the vehicle communication bus (12) in accordance with the main schedule;
b) receiving a diagnosis request signal via a data input (32) that is different from the bus port (18) of the master bus device (14);
c) based on the diagnosis request signal, at least once interrupting the cyclic processing of the main schedule (22) and exchanging at least one special message that is different from the messages stipulated in the main schedule (22) with at least one of the slave bus devices (16);
**characterized by** the steps:
d) during a further interruption of the main schedule through one-off processing of a second special schedule (26, 28), receiving a diagnosis response from at least one slave bus devices via the vehicle communication bus (12);
e) after each interruption, again generating messages on the communication bus (12) in accordance with the main schedule (22).

## Revendications

1. Appareil de bus maître (14) pour un véhicule à moteur (10), qui est configuré afin d'échanger des messages avec des appareils de bus subordonnés (16) du véhicule à moteur (10) par l'intermédiaire d'un bus de communication de véhicule (12) du véhicule à moteur (10), dans lequel, dans l'appareil de bus maître (14), il est déterminé par un plan de déroulement (22) quels messages l'appareil de bus maître (14) échange avec les appareils de bus subordonnés (16), et dans lequel le plan de déroulement est élaboré de manière cyclique par un dispositif d'émission (20) de l'appareil de bus maître (14) et le dispositif d'émission (20) échange ce faisant les messages déterminés selon le plan de déroulement (22) avec les appareils de bus subordonnés (16),
dans lequel le dispositif d'émission (20) est configuré afin de recevoir un signal de demande de diagnostic par l'intermédiaire d'une entrée de données (32) différente du raccord de bus (18) de l'appareil de bus maître (14) et afin d'interrompre au moins une fois l'élaboration cyclique du plan de déroulement (22) en fonction du signal de demande de diagnostic et afin d'échanger, au cours de l'interruption, au moins un message spécifique différent des messages déterminés dans le plan de déroulement (22) avec au moins un des appareils de bus subordonnés (16), et
**caractérisé en ce que**
le dispositif d'émission (20) est en outre configuré afin de recevoir d'au moins un appareil de bus subordonné une réponse de diagnostic par l'intermédiaire du bus de communication de véhicule (12) au cours d'une nouvelle interruption du plan de déroulement par une élaboration unique d'un deuxième plan de déroulement spécifique (26, 28) et afin de poursuivre respectivement après l'interruption l'élaboration du plan de déroulement (22).

2. Appareil de bus maître (14) selon la revendication 1, dans lequel l'appareil de bus maître (14) est configuré afin d'échanger les messages par l'intermédiaire d'un bus LIN (12), dans lequel les messages et l'au moins un message spécifique sont réalisés respectivement sous la forme d'un message LIN.

3. Appareil de bus maître (14) selon l'une quelconque des revendications précédentes, dans lequel le plan de déroulement (22) est configuré pour un fonctionnement normal du véhicule à moteur (10), dans lequel, en fonctionnement normal, un conducteur utilise le véhicule à moteur (10), et dans lequel le plan de déroulement (22) comprend, au moins pour une large partie, de manière préférée en totalité, seulement des messages concernant le fonctionnement du véhicule à moteur (10) au cours du fonctionnement normal.

4. Appareil de bus maître (14) selon l'une quelconque des revendications précédentes, dans lequel chaque message spécifique comprend au moins une partie d'une demande de diagnostic, qui est contenue dans le signal de demande de diagnostic, et/ou au moins une partie de données de configuration, qui sont contenues dans le signal de demande de diagnostic.

5. Appareil de bus maître (14) selon l'une quelconque des revendications précédentes, dans lequel le dispositif d'émission (20) est configuré afin d'envoyer, au cours de l'interruption respective du plan de déroulement, l'au moins un message spécifique en élaborant une fois un premier plan de déroulement spécifique (26, 28).

6. Appareil de bus maître (14) selon l'une quelconque des revendications précédentes, dans lequel le dispositif d'émission (20) est configuré afin de poursuivre l'élaboration du plan de déroulement (22) à un endroit dans le plan de déroulement (22), au niveau duquel l'élaboration a été interrompue afin d'émettre le message spécifique respectif.

7. Véhicule à moteur (10) comprenant un bus de communication de véhicule (12), auquel un appareil de bus maître (14) selon l'une quelconque des revendications précédentes est raccordé.

8. Procédé servant à faire fonctionner un appareil de bus maître (14) pour un bus de communication de véhicule (12) d'un véhicule à moteur (10), dans lequel, dans l'appareil de bus maître (14), il est déterminé par un plan de déroulement (22) quels messages l'appareil de bus maître (14) échange avec des appareils de bus subordonnés (16) du véhicule à moteur par l'intermédiaire du bus de communication de véhicule (12), comprenant les étapes suivantes :
a) l'élaboration cyclique du plan de déroulement (22), et de ce fait, la production de messages sur le bus de communication (12) selon le plan de déroulement par un dispositif d'émission (20) de l'appareil de bus maître (14) ;
b) la réception d'un signal de demande de diagnostic par l'intermédiaire d'une entrée de données (32) différente du raccord de bus (18) de l'appareil de bus maître (14) ;
c) en fonction du signal de demande de diagnostic, l'interruption au moins une fois de l'élaboration cyclique du plan de déroulement (22) et l'échange au moins d'un message spécifique différent des messages déterminés dans le plan de déroulement (22) avec au moins un des appareils de bus subordonnés (16) ; **caractérisé par** les étapes suivantes :
d) au cours d'une nouvelle interruption du plan de déroulement par une élaboration unique d'un deuxième plan de déroulement spécifique (26, 28), la réception d'une réponse de diagnostic d'au moins un appareil de bus subordonné par l'intermédiaire du bus de communication de véhicule (12) ;
e) après chaque interruption, la production à nouveau de messages sur le bus de communication (12) selon le plan de déroulement (22).
